(19) Europäisches Patentamt / European Patent Office / Office européen des brevets

(11) **EP 2 963 583 A1**

(12) **EUROPEAN PATENT APPLICATION**

(43) Date of publication:
06.01.2016 Bulletin 2016/01

(51) Int Cl.:
***G06K 9/00*** (2006.01)

(21) Application number: 15175368.8

(22) Date of filing: 05.07.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 04.07.2014 GB 201411969

(71) Applicant: **IDscan Biometrics Limited London E14 9QD (GB)**

(72) Inventors:
• **THOMPSON, Tamlyn London, E14 9QD (GB)**
• **ZEIDAN, Zaher London, E14 9QD (GB)**

(74) Representative: **McBride, Peter Hill Scintilla Intellectual Property Ltd The Centrum Building 38 Queen Street Glasgow G1 3DX (GB)**

(54) **Method, apparatus and computer program for facial recognition-based identity verification**

(57) A facial recognition based identity verification method comprising the steps of:

allowing an operator to specify a value of a Recording Interval and a First Threshold Value;

receiving a plurality of digital images acquired by a digital camera;

storing digital images acquired over successive Recording Intervals;

allowing a user to trigger an Activation Signal;

receiving the Activation Signal and detecting the substantially largest face present in the digital image acquired substantially at that instant;

continuing to receive and store digital images acquired over the Recording Interval immediately following receipt of the Activation Signal;

detecting the substantially largest face present in each digital image acquired over the Recording Intervals immediately preceding and following receipt of the Activation Signal;

calculating a one or more measures of matching between the substantially largest face detected in the digital image acquired on receipt of the Activation Signal and each of the substantially largest faces detected in the digital images acquired over the Recording Intervals immediately preceding and following receipt of the Activation Signal;

calculating an aggregate value of the matching between the substantially largest face detected in the digital image acquired on receipt of the Activation Signal and the substantially largest faces detected in all of the digital images acquired over the Recording Intervals immediately preceding and following receipt of the Activation Signal;

comparing the aggregate value with the First Threshold Value;

allowing a host organization to terminate the facial recognition based identity verification method in the event the aggregate value is less than the First Threshold Value; and otherwise, interrogating a repository to identify a one or more digital images in the repository of a face which most closely matches the substantially largest face detected in the digital image acquired on receipt of the Activation Signal; and

issuing an alert in the event an image is not found in the repository of a face that matches within a required degree of tolerance, the substantially largest face detected in the digital image acquired on receipt of the Activation Signal; and otherwise, issuing a report advising that the user has been identified.

Figure 3

# Description

## Field of the Invention

The present invention relates to a method, system and computer program for verifying an identity based on facial recognition, and more specifically, but not exclusively adapted to distinguish between images of persons and images of photographs of persons.

## Background to the Invention

The UK Home Office Identity Fraud Steering Committee defines identity fraud as "when a false identity or someone else's identity details are used to support unlawful activity, or when someone avoids obligation/liability by falsely claiming that he/she was the victim of identity fraud" (National Fraud Authority, Fraud Typologies and Victims of Fraud - Literature Review 2009). Identity crimes are one of the fastest growing types of fraud in the UK. The UK's Fraud prevention service found that identity fraud accounted for roughly 50% of all frauds recorded in 2012; and that there had been a 9 per cent increase in identity frauds, compared with 2011 (CIFAS 2012 Fraud Trends, 17 Jan 2013). In December 2012 the National Fraud Authority suggested that identity fraud cost UK adults approximately £3.3 billion each year (National Fraud Authority, Annual Fraud Indicator 2013). However, this does not include any losses suffered by the public, private or charity sectors. Therefore, the full cost to the UK from identity fraud each year is likely to be considerably higher. Similarly, a National Crime Victimization Survey conducted in the US found that individual financial losses due to personal identity theft totalled $24.7 billion, over $10 billion more than the losses attributed to all other property crimes measured in the survey (Victims of Identity Theft 2012).

Automated systems for identity verification based on facial recognition are known. For example, CN102750521 describes a face-based identity recognition system, comprising an information collecting device, an information processing device connected with the information collecting device, a face information database connected with the information processing device and a computer terminal for displaying processing results and being connected with the information processing device. In this invention, the information collecting device collects and stores face information; and the information processing device extracts information characteristics of five sense organs from the collected face information, searches for similar face images from the face information database, and prioritizes face images according to similarities to display the face images through the computer terminal. However, these prior art systems are limited insofar as they do not consider the source of the face presented thereto. In other words, the face whose digital image is acquired by these prior art systems may be that of a living person presenting themselves to the prior art systems. However, the face may also be from a photograph presented to the digital camera of the prior art facial recognition systems. To overcome technical challenges created by differences in poses of candidate faces or variation of illumination condition, many prior art systems base their facial recognition algorithms on portrait, frontal face images of persons. However, this technical compromise creates opportunities for determined fraudsters to overcome the prior art systems.

## Summary of the Invention

According to a first aspect of the invention there is provided a facial recognition based identity verification method comprising the steps of:

allowing an operator to specify a value of a Recording Interval and a First Threshold Value;
receiving a plurality of digital images acquired by a digital camera;
storing digital images acquired over successive Recording Intervals;
allowing a user to trigger an Activation Signal;
receiving the Activation Signal and detecting the substantially largest face present in the digital image acquired substantially at that instant;
continuing to receive and store digital images acquired over the Recording Interval immediately following receipt of the Activation Signal;
detecting the substantially largest face present in each digital image acquired over the Recording Intervals immediately preceding and following receipt of the Activation Signal;
calculating a one or more measures of matching between the substantially largest face detected in the digital image acquired on receipt of the Activation Signal and each of the substantially largest faces detected in the digital images acquired over the Recording Intervals immediately preceding and following receipt of the Activation Signal;
calculating an aggregate value of the matching between the substantially largest face detected in the digital image acquired on receipt of the Activation Signal and the substantially largest faces detected in all of the digital images acquired over the Recording Intervals immediately preceding and following receipt of the Activation Signal;
comparing the aggregate value with the First Threshold Value;
allowing a host organization to terminate the facial recognition based identity verification method in the event the aggregate value is less than the First Threshold Value; and otherwise, interrogating a repository to identify a one or more digital images in the repository of a face which most closely matches the substantially largest face detected in the digital image acquired on receipt of the Activation Signal; and

issuing an alert in the event an image is not found in the repository of a face that matches within a required degree of tolerance, the substantially largest face detected in the digital image acquired on receipt of the Activation Signal; and otherwise, issuing a report advising that the user has been identified.

Preferably, the step of storing (54) digital images acquired over successive Recording Intervals comprises the step of sequentially storing the digital images for a period substantially equal to the Recording Interval and subsequently deleting the digital images in the absence of the detection of the Activation Signal.

Preferably, the step of interrogating a repository comprises the step of interrogating the repository in the event the host organization does not terminate the facial recognition based identity verification method.

Preferably, the step of interrogating a repository is preceded by a step of receiving details of the identity claimed by the user; the step of interrogating the repository comprises the steps of

interrogating the repository to retrieve therefrom a record comprising details which most closely match the details of the identity claimed by the user; and

comparing the digital image acquired on receipt of the Activation Signal with a digital image depicting the face of the person to whom the retrieved record pertains;

and the step of issuing an alert comprises the steps of issuing an alert in the event a record with details matching the details of the identity claimed by the user, is not found in the repository; or the face in the digital image acquired on receipt of the Activation Signal does not match to a required degree of tolerance the face of the person to whom the retrieved record pertains.

Desirably, the step of receiving details (38) of the identity claimed by the user comprises the steps of scanning an identity document presented by the user to obtain a scanned image thereof; and extracting relevant details from the scanned image.

Desirably, the step of scanning an identity document presented by the user to obtain a scanned image thereof comprises the step of scanning a passport, a driving license or an identity card.

Desirably, the step of calculating a one or more measures of matching between the substantially largest face detected in the image acquired on receipt of the Activation Signal and each of the substantially largest faces detected in the images acquired over the Recording Intervals immediately preceding and following receipt of the Activation Signal; comprises the step of calculating a one or more measures of matching selected from the set comprising Pearson correlations, covariances and cross products; Euclidean, Manhattan and squared distances and binary matching.

Desirably, the method according to the first aspect is executed, on a mobile telephony device and the step of receiving a plurality of digital images acquired by a digital camera comprises the step of receiving a plurality of digital images acquired by a digital camera in the mobile telephony device; and

the step of allowing a user to trigger an Activation Signal comprises the steps of

displaying on a display means of the mobile telephony device the digital images acquired by the digital camera; overlaying on the displayed digital images, a one or more framing guides adapted to guide the user into positioning the mobile telephony device to achieve optimal positioning of the user's face within the focal plane of the digital camera; and

triggering the Activation Signal on achieving the optimal positioning of the user's face relative to the digital camera.

Preferably, the step of scanning an identity document presented by the user to obtain a scanned image thereof comprises the step of allowing the user to present the identity document to the digital camera of the mobile telephony device and using the digital camera to acquire a digital image of the presented identity document.

According to a second aspect of the invention there is provided a facial recognition based identity verification apparatus comprising a primary digital camera; and a display means and an image buffer respectively adapted to display and temporarily store digital images acquired by the primary digital camera;

wherein the facial recognition based identity verification apparatus further comprises a triggering means adapted in use to allow the user to trigger the issuance of an Activation Signal and

a logic unit adapted to receive the Activation Signal and cause the storage of the digital images acquired by the primary digital camera over the Recording Intervals immediately preceding and following receipt of the Activation Signal;

a face detector module adapted to detect the substantially largest face present in each stored digital image a calculating means adapted to calculate an aggregate value of the degree of matching between the substantially largest face detected in the digital image acquired on receipt of the Activation Signal and the substantially largest faces detected in the digital images acquired over the Recording Intervals immediately preceding and following receipt of the Activation Signal;

a thresholding module adapted to compare the aggregate value against a predefined first threshold value and issue an alert in the event the aggregate value is less than the predefined first threshold value, and otherwise compare the substantially largest face detected in the digital image acquired on receipt of the Activation Signal with a plurality of digital images of authorised faces contained in the repository; and verify the identity of the user in the event of a match.

Preferably, the display means is adapted, in use, to display guiding means, to guide the user into achieving the optimal positioning of their face within the primary focal plane of the digital camera.

Preferably, the facial recognition based identity verification apparatus comprises a data entry means adapted to allow the user to provide additional identifying information to the facial recognition based identity verification apparatus; wherein the thresholding module comprises a retrieval module adapted to retrieve from the repository a record comprising details that most closely match those of the additional identifying information; and the facial recognition based identity verification apparatus comprises a comparator adapted to compare the substantially largest face detected in the digital image acquired on receipt of the Activation Signal with a face contained in a digital image in the retrieved record; and a reporting means adapted to issue an alert in the event of a mismatch or otherwise issue a report stating that the user's identity has been verified.

Preferably, the data entry means comprises a passport scanner, or a driving licence scanner or an identity card scanner.

Desirably, the facial recognition based identity verification apparatus comprises at least two secondary digital cameras disposed on either side of the primary digital camera and adapted in use to capture profile views of the user.

Desirably, the facial recognition based identity verification apparatus comprises at plurality of lighting means disposed on either side of the primary digital camera and adapted in use to provide uniform lighting conditions for the primary digital camera. According to a third aspect of the invention there is provided a facial recognition based identity verification computer program, tangibly embodied on a computer readable medium, the computer program product including instructions for causing a computer to execute the facial recognition based identity verification method of the first aspect of the invention.

By capturing video image sequences from periods preceding and following the acquisition of a digital image of a user, the facial recognition based identity verification system, method and apparatus, provides additional levels of security and confidence, that the image acquired is that of the person presenting themselves for consideration (and not an image of a photograph presented by the use in an effort to frustrate a conventional image verification method). Furthermore, the captured video sequences from the facial recognition based identity verification system provide basis for subsequent audit, to demonstrate that the person whose identity was verified by the facial recognition based identity verification system was actually the real person who presented themselves for verification.

Description of the Invention

Preferred embodiments of the present invention are herein described, by way of example of only, with reference to the accompanying figures in which:

Figure 1 is a flowchart of the facial recognition-based identity verification method;

Figure 2 is a block diagram of the facial recognition-based identity verification system;

Figure 3 is a perspective view of a first embodiment of the facial recognition-based identity verification system in use; and

Figure 4 is a perspective view of a second embodiment of the facial recognition-based identity verification system in use.

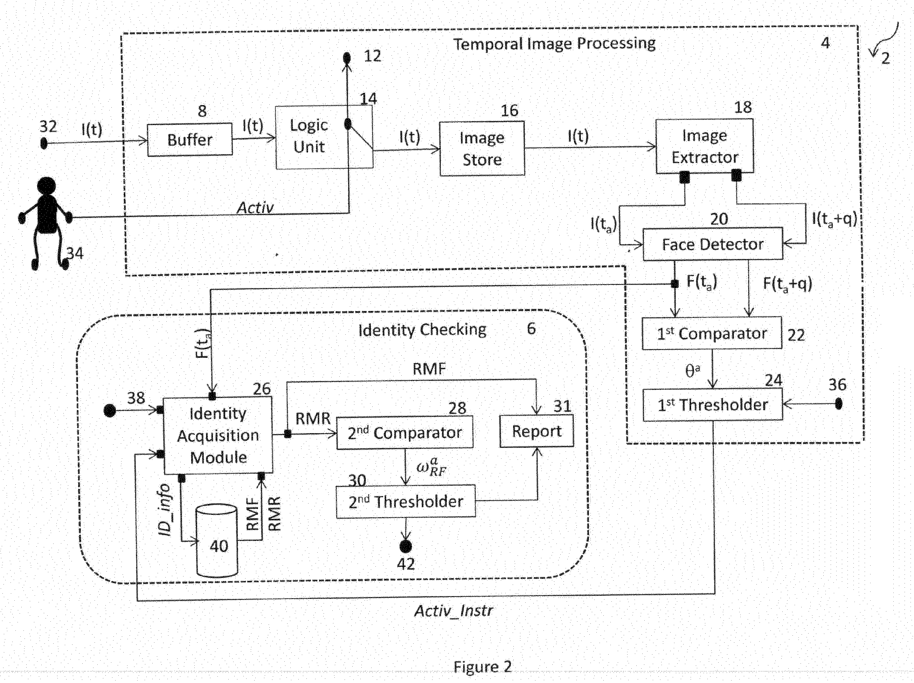

Referring to Figure 2, the facial recognition-based identity verification system 2 comprises a temporal image processing module 4 operably coupled with an identity checking module 6. The temporal image processing module 4 comprises an image buffer 8, an image dump 12 and a logic unit 14. The temporal image processing module 4 further comprises an image store 16, an image extractor module 18 and a face detector module 20. Similarly, the temporal image processing module 4 further comprises a first comparator module 22 and a first thresholding module 24. The identity checking module 6 comprises an identity acquisition module 26, a second comparator module 28, a second thresholding module 30 and a reporting module 31.

Referring to the temporal image processing module 4, the image buffer 8 is adapted, in use, to receive a stream of digital images acquired by a digital camera 32. The image buffer 8 comprises storage means (not shown) adapted to store in sequential order the received digital images, and thereby form a stored digital image sequence. The stored digital image sequence forms a recording of a particular duration. The image buffer 8 is configurable by the operator (not shown), so that the operator (not shown) is allowed to predefine the duration of the stored recording, or correspondingly, the number (n) of digital images to be stored in the storage means (not shown). For clarity, at any time instant t, the stored digital image sequence comprises a plurality of digital images ($I(t)$ to $I(t+n)$), wherein the time interval elapsed between $I(t)$ and $I(t+n)$ will henceforth be known as the Recording Interval. The image buffer 8 is further adapted to sequentially eject individual digital images from the storage means (not shown) into the image dump 12 for subsequent deletion (to make space in the image buffer 8 for the next digital image from the digital camera 32).

The logic unit 14 is arranged to intervene between the image buffer 8 and the image dump 12, and receive the digital images ejected from the storage means (not shown). The logic unit 14 is further operably coupled with the image store 16. The logic unit 14 comprises a switching means (not shown) which is configured in its default state to transmit to the image dump 12 the digital images received from the image buffer 8. The logic unit 14 is further adapted to receive an activation signal *Activ* from the user 34 of the facial recognition-based identity verification system 2. The instant at which the activation signal *Activ* is received by the logic unit 14 will be known henceforth as the Activation Instant ($t_a$). The

switching means (not shown) in the logic unit 14 is adapted on receipt by the logic unit 14 of the activation signal *Activ,* to redirect the digital images ejected from the image buffer 8 into the image store 16. More specifically, the logic unit 14 is adapted to redirect digital images from the period comprising

(a) the Recording Interval immediately preceding the Activation Instant I(ta-x), I($t_a$-x-1), ....... I($t_a$-1));
(b) the digital image acquired at the Activation Instant ($t_a$); and
(c) the Recording Interval immediately following the Activation Instant (I(ta+1), I(ta⁺2), ....... I($t_a$+x)).

The image store 16 is adapted to store the digital images received from the logic unit 14. Thus, using the above formulation, the image store 16 is adapted to store 2x+1 image frames [I($t_a$-x) to I($t_a$+x)].

The image store 16 is operably coupled with the image extractor module 18 which is coupled in turn with the face detector module 20. More specifically, the image store 16 is adapted to transmit its stored digital images to the image extractor module 18, which is adapted in turn to receive the digital images from the image store 16 and extract therefrom:

(a) the digital image acquired at the Activation Instant ($t_a$) - for clarity, this digital image will be known henceforth, as the Activation Image (I($t_a$)); and
(b) each other digital image - for clarity, the each other extracted digital images will be known henceforth as Test Images (I($t_a$+q), $q \neq 0$).

The image extractor module 18 is adapted to transmit the Activation Image (I($t_a$)) and the Test Images (I($t_a$+q), $q \neq 0$) to the face detector module 20. The face detector module 20 comprises a one or more image/face comparison algorithms (not shown). The face detector module 20 is adapted to receive the Activation Image (I($t_a$)) and the Test Images (I($t_a$+q), $q \neq 0$) from the image extractor module 18 and process the received Activation Image (I($t_a$)) and the Test Images (I($t_a$+q), $q \neq 0$) with the or each of the image/face comparison algorithms (not shown), to detect the largest faces present in each of the Activation Image (I($t_a$)) and the Test Images (I($t_a$+q), $q \neq 0$). For brevity, the largest face detected in the Activation Image (I($t_a$)) will be known henceforth as the Activation Face (F($t_a$)). Similarly, the largest face detected in each Test Image (I($t_a$+q), $q \neq 0$) will be known henceforth as the Test Faces (F($t_a$+q), $q \neq 0$).

The face detector module 20 may optionally be further adapted to:

(a) extract, for the subsequent processing steps, the Activation Face (F($t_a$)) from the Activation Image (I($t_a$)) and the Test Faces (F($t_a$+q), $q \neq 0$) from the Test Images (I($t_a$+q), $q \neq 0$); and
(b) discard the rest of the background in the Activa-

tion Image (I($t_a$)) and each of the Test Images (I($t_a$+q), $q \neq 0$).

This will serve the dual purpose of protecting the privacy of other persons who might be inadvertently captured in the Activation Image (I($t_a$)) and the Test Images (I($t_a$+q), $q \neq 0$); and reducing the computational load of processing image data that is essentially irrelevant for the purposes of the preferred embodiment.

The face detector module 20 is operably coupled with a first comparator module 22, to transmit the Activation Face (F($t_a$)) and the Test Faces (F($t_a$+q), $q \neq 0$) to the first comparator module 22, which is adapted in turn to receive the Activation Face (F($t_a$)) and the Test Faces (F($t_a$+q), $q \neq 0$) from the face detector module 20. The first comparator module 22 comprises a one or more algorithms (not shown) for assessing the similarity between the Activation Face (F($t_a$)) and each of the Test Faces (F($t_a$+q), $q \neq 0$). More specifically, the or each algorithm is adapted to calculate a one or more measures of the degree of matching between the Activation Face (F($t_a$)) and each Test Face F($t_a$+q), which, for brevity, will be known henceforth as an Individual Image Face Match $\omega_q^a$. Any suitable metric may be used for assessing the Individual Image Face Match $\omega_q^a$, including without limitation, Pearson correlations, covariances and cross products; Euclidean, Manhattan and squared distances; binary matching (exact, Jaccard and Hamming) etc.

The first comparator module 22 comprises a summing element (not shown) which is adapted to combine the or each Individual Image Face Matches $\omega_q^a$, and calculate therefrom an aggregate $\theta^a$ measure of the degree of matching between the Activation Face (F($t_a$)) and all of the Test Faces F($t_a$+q). For the sake of brevity, the aggregate measure of the degree of matching between the Activation Face (F($t_a$)) and all of the Test Faces F($t_a$+q) will be known henceforth as the Aggregate Temporal Match Measure $\theta^a$. The Aggregate Temporal Match Measure $\theta^a$ provides an indication of any changes between the face presented at the Activation Instant ($t_a$) and faces detected in the stream of digital images acquired by the digital camera 32 before and after the Activation Instant ($t_a$).

The first comparator module 22 is operably coupled with the first thresholding module 24 to transmit the Aggregate Temporal Match Measure $\theta^a$ to the first thresholding module 24. The first thresholding module 24 is adapted in turn to receive the Aggregate Temporal Match Measure $\theta^a$ and compare the Aggregate Temporal Match Measure $\theta^a$ with a predefined first threshold value 36 (whose value may or may not be configurable by the operator (not shown) of the facial recognition-based identity verification system 2. The first thresholding module 24 is operably coupled with the identity checking module 6 and an alert issuing module (not shown). In particular, the first thresholding module 24 is adapted to issue an activation instruction *Activ_Instr* to the identity acquisition module 26 in the event the Aggregate Temporal Match Measure $\theta^a$ is greater than or equal to the first threshold value 36. Otherwise, the first thresholding module 24 is adapted to activate the alert issuing module (not shown) to transmit an alert message to the host organisation (not shown).

The identity checking module 6 is operably coupled with the temporal image processing module 4 through the transmission of the Activation Face ($F(t_a)$) from the face detector module 20 in the temporal image processing module 4 to the identity acquisition module 26 in the identity checking module 6. Whereas the temporal image processing module 4 is adapted to operate as a background process without the knowledge of the user 34 of the facial recognition-based identity verification system, the identity checking module 6 is, in contrast, adapted to operate on:

> request by the user 34 (through receipt of the Activation Face ($F(t_a)$), which is itself only generated in response to the activation signal *Activ* received from the user); and
> on receipt of the activation instruction *Activ_Instr* from the first thresholding module 24 (or an activation instruction *Activ_Instr* from the host organisation (not shown) in the event the Aggregate Temporal Match Measure $\theta^a$ is less than the first threshold value 36).

A further embodiment of the identity acquisition module 26 may be adapted to receive details 38 of the identity claimed by the user 34. To this end, the identity acquisition module 26 may comprise an identity card scanning function adapted to scan and extract relevant data from a presented identity card. Alternatively, the identity acquisition module 26 may comprise a passport reader function adapted to scan and extract relevant data from a presented passport document. Similarly, the identity acquisition module 26 may comprise a visual or voice recognition UI through which the user 34 may manually enter or verbalize their identity details. The skilled person will understand that the above examples of this further embodiment of the identity acquisition module 26 are provided for illustration purposes only and should in no way be construed as limiting the scope of the preferred embodiment. In particular, this further embodiment of the preferred embodiment may operate with any channel with which the user 34 might provide details of their claimed identity. For simplicity, the term Identifying Information (*ID_info*) will be used henceforth to refer to either of:

> (a) the Activation Face ($F(t_a)$); or
> (b) the Activation Face ($F(t_a)$) and received details 38 of the identity claimed by the user 34.

The identity acquisition module 26 is adapted, in use, to access a repository 40 of authenticated face images (e.g. from passport or other identity documents). The repository 40 may be integral with the temporal image processing module 4. Alternatively, the repository 40 may be in the possession of and operated by a third party, in which case, the identity acquisition module 26 is granted third-party access rights to the repository 40. In either configuration, the identity acquisition module 26 is adapted to use the identifying information (*ID_info*) to interrogate the repository 40. More specifically, in one embodiment, the identity acquisition module 26 is adapted to retrieve from the repository 40 an image of a face that most closely matches the Activation Face ($F(t_a)$). In identifying the image of the face in the repository that most closely matches the Activation Face, the identity acquisition module 26 is adapted to calculate a measure of the degree of match between the images of the faces in the Repository 40 and the Activation Face ($F(t_a)$). Any suitable metric may be used for assessing the degree of matching, including without limitation, Pearson correlations, covariances and cross products; Euclidean, Manhattan and squared distances; binary matching (exact, Jaccard and Hamming) etc. The calculated degree of matching between each image of a face in the repository 40 and the Activation Face ($F(t_a)$) is compared with a predefined retrieval threshold (not shown). In the event none of the calculated degrees of matching between the images of faces in the repository 40 and the Activation Face ($F(t_a)$) exceed the retrieval threshold (not shown), the identity acquisition module 26 is adapted to transmit a failure message (not shown) to the reporting module 31. The reporting module 31 is adapted to receive the failure message (not shown) from the identity acquisition module 26 and to issue to the hosting organisation (not shown) a report indicating that that the user 34 has not been recognized by the facial recognition-based identity verification system 2.

However, in the event one or more of the calculated degrees of matching between the images of faces in the repository 40 and the Activation Face ($F(t_a)$) exceed the retrieval threshold (not shown), the image from the repository with largest valued calculated degree of matching with the Activation Face ($F(t_a)$) is retrieved from the repository 40. For simplicity, this image will be referred to henceforth as the Retrieved Matching Face (RMF). The identity acquisition module 26 is further adapted to transmit the Retrieved Matching Face (RMF) to the reporting module 31. The reporting module 31 is adapted on receipt of the Retrieved Matching Face (RMF), to issue to the hosting organisation (not shown) a report indicating that that the user 34 has been recognized by the facial recognition-based identity verification system 2, wherein the report may optionally display the Activation Face ($F(t_a)$) and the Retrieved Matching Face (RMF).

In a further embodiment, the identity acquisition module 26 is adapted to retrieve from the repository 40 a record of a person whose identity details most closely match the received details 38 of the identity claimed by the user 34. For simplicity, this record will be referred to henceforth as the Retrieved Matching Record (RMR). The Retrieved Matching Record (RMR) includes a digital image of the face of the relevant person.

In the event it is not possible to identify a record in the repository of a person whose identity details match the received details 38 of the user 34, the identity acquisition module 26 is adapted to issue a failure message (not shown) to the reporting module 31. The reporting module 31 is adapted to receive the failure message (not shown) from the identity acquisition module 26 and to issue to the hosting organisation (not shown) a report indicating that that the user 34 has not been recognized by the facial recognition-based identity verification system 2.

However, in the event a Retrieved Matching Record (RMR) is retrieved from the repository 40, the identity acquisition module 26 is adapted to extract from the Retrieved Matching Record (RMR) the image of the face of the relevant person. For simplicity, this image will be known henceforth as the Retrieved Facial Image. The identity acquisition module 26 is adapted to transmit the Retrieved Facial Image to the second comparator 28.

The second comparator module 28 is adapted to receive the Retrieved Facial Image from the identity acquisition module 26; and to compare the Retrieved Facial Image with the Activation Face ($F(t_a)$) (received from the first comparator module 22). More specifically, the second comparator module 28 is adapted to calculate a measure of the degree of match between the Retrieved Facial Image and the Activation Face ($F(t_a)$). Any suitable metric may be used for assessing the degree of matching, including without limitation, Pearson correlations, covariances and cross products; Euclidean, Manhattan and squared distances; binary matching (exact, Jaccard and Hamming) etc. For brevity, the degree of matching between the Activation Face ($F(t_a)$) and the Retrieved Facial Image will be known henceforth as an Final Image Face Match $\omega_{RF}^{a}$.

The second comparator module 28 is adapted to transmit the Final Image Face Match $\omega_{RF}^{a}$ to the second thresholding function 30. The second thresholding function 30 is adapted to receive the Final Image Face Match $\omega_{RF}^{a}$ from the second comparator module 28 and to compare the Final Image Face Match $\omega_{RF}^{a}$ against a predefined second threshold value 42 (which may or may not be the same as the first threshold value 36).

The second thresholding function 30 is adapted, in the event the Final Image Face Match $\omega_{RF}^{a}$ is less than the second threshold value 42, to issue an alert message (not shown) to the reporting module 31. The reporting module 31 is adapted to receive the failure message (not shown) from the second thresholding function 30 and to issue to the hosting organisation (not shown) a report indicating that there is an inconsistency between the face image of the user 34 and the person whose identity details most closely match those of the user 34. The second thresholding function 30 is adapted otherwise, to transmit an authentication message (not shown) to the reporting module 31. The reporting module 31 is adapted to receive the authentication message (not shown) and to issue to the hosting organisation (not shown) a report indicating that that the user 34 has been recognized by the facial recognition-based identity verification system 2, wherein the report may optionally display the Activation Face ($F(t_a)$) and the Retrieved Facial Image.

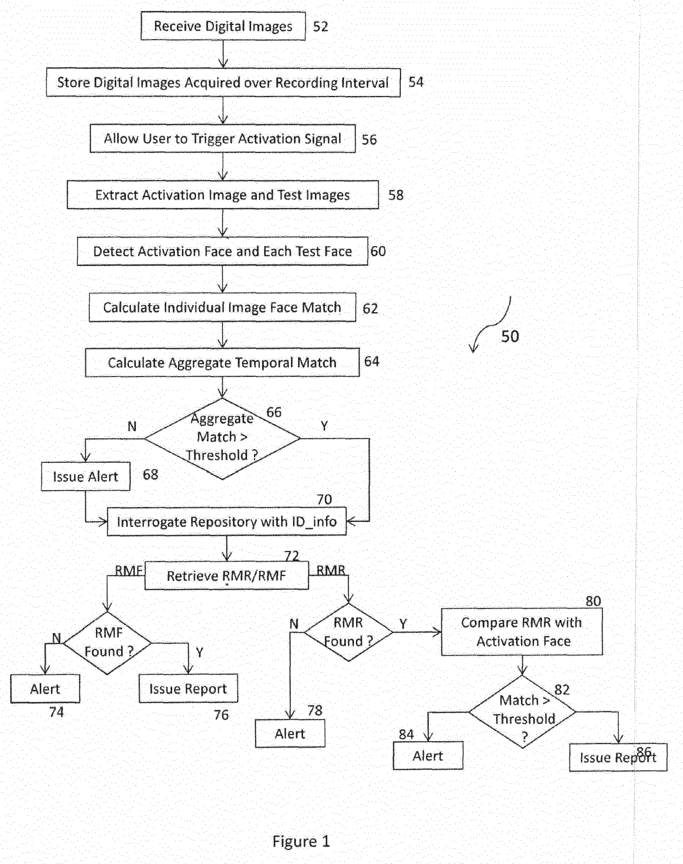

Referring to Figure 1 together with Figure 2, the facial recognition-based identity verification method 50 of the preferred embodiment may comprise a first step of receiving 52 digital images acquired at regular sampling intervals by the digital camera 32. The next step of the facial recognition-based identity verification method 50 comprises sequentially storing (over the period of the Recording Interval) 54 the digital images in the image buffer 8.

The facial recognition-based identity verification method 50 comprises a next step of allowing 56 the user 34 to trigger the activation signal *Activ* and transmitting (not shown) the activation signal *Activ* to the logic unit 14. The next step of the facial recognition-based identity verification method 50 comprises checking (not shown) for the receipt by the logic unit 14 of the activation signal *Activ,* and in the absence thereof transmitting (not shown) the stored digital images through the logic unit 14, to the image dump 12 for subsequent deletion (not shown). However, in the event of receipt of the activation signal *Activ* by the logic unit 14, the next step of the facial recognition-based identity verification method 50 comprises extracting 58 (by the image extractor module 18) the Activation Image ($I(t_a)$) and the Test Images ($I(t_a+q)$, $q \neq 0$) from the stored digital images.

A next step of the facial recognition-based identity verification method 50 comprises detecting 60 (by the face detector module 20) the Activation Face ($F(t_a)$) from the Activation Image ($I(t_a)$) and the Test Face ($F(t_a+q)$, $q \neq 0$) from each Test Image ($I(t_a+q)$, $q \neq 0$). Similarly, a next step comprises calculating 62 (by the or each image/face comparison algorithm in the first comparator module 22) the Individual Image Face Match $\omega_{q}^{a}$. This is followed by the step of combining the or each Individual Image Face Matches $\omega_{q}^{a}$, to calculate 64 (by the first thresholding module 24) the Aggregate Temporal Match Measure $\theta^{a}$.

A next step of the facial recognition-based identity verification method 50 comprises comparing 66 (by the first thresholding module 24) the Aggregate Temporal

Match Measure $\theta^a$ with the first threshold value 36. In the event, the aggregate measure $\theta^a$ is less than the first threshold value 36, the facial recognition-based identity verification method 50 comprises the step of issuing 68 an alert message to the authorities that the face presented by the user to the facial recognition-based identity verification system on activation thereof by the user does not match the dominant face appearing in the image sequences preceding and following the activation. The host organisation (not shown) may choose to terminate the facial recognition-based identity verification method 50 on receipt of an alert, so that the user may not be allowed to proceed any further. Alternatively, the host organisation (not shown) may choose to continue the facial recognition-based identity verification method 50.

Thus, in the event the aggregate measure $\theta^a$ greater than or equal to the first threshold value 36 (or the host organisation (not shown) chooses to allow the continuation of the facial recognition-based identity verification method 50) a next step in the facial recognition-based identity verification method 50 interrogating 70 the repository 40 with the available Identifying Information (*ID_info*). This is followed by the step of retrieving 72 from the repository 40 the Retrieved Matching Face (RMF) or the Retrieved Matching Record (RMR) as appropriate. In connection with this, an embodiment of the facial recognition-based identity verification method 50 may comprise a preceding step of receiving (not shown) from the user 34 details 38 of their claimed identity (by way of passport, identity card etc.). In this case, the received details of the claimed identity are combined with the Activation Face ($F(t_a)$) to form the Identifying Information (*ID_info*) and the information retrieved from the repository 40 comprises the Retrieved Matching Record (RMR). Otherwise, the Identifying Information (*ID_info*) is solely comprised of the Activation Face ($F(t_a)$) and the information retrieved from the repository 40 comprises the Retrieved Matching Face (RMF).

For the embodiment in which the Identifying Information (*ID_info*) is solely comprised of the Activation Face ($F(t_a)$), in the event it is not possible to identify a face in the repository that matches the Activation Face ($F(t_a)$), the facial recognition-based identity verification method 50 comprises the step of issuing 74 an alert message to the host organisation (not shown) stating that the user 34 has not been recognized. Otherwise, the facial recognition-based identity verification method 50 comprises the step of issuing 76 a report to the host organisation (not shown) stating that the user 34 has been recognized and optionally including in the report the corresponding Retrieved Matching Face (RMF).

For the embodiment in which the Identifying Information (*ID_info*) comprises the Activation Face ($F(t_a)$) and the received details 38 of the claimed identity, in the event it is not possible to identify a record in the repository of a person whose identity details match the received details 38 of the user 34, the facial recognition-based identity verification method 50 comprises the step of issuing 78 an alert message to the host organisation (not shown) stating that the user 34 has not been recognized. Otherwise, the facial recognition-based identity verification method 50 comprises the step of extracting (not shown) the image of the face from the Retrieved Matching Record and comparing 80 the resulting Retrieved Facial Image with the Activation Image ($F(t_a)$) (received from the first comparator module 22) to calculate the degree of matching therebetween (expressed as the Final Image Match $\omega^a_{RF}$).

A next step of the facial recognition-based identity verification method 50 comprises determining 82 whether the Final Image Match $\omega^a_{RF}$ exceeds the second threshold level 42. In the event the Final Image Match $\omega^a_{RF}$ is less than or equal to the second threshold level 42, the facial recognition-based identity verification method 50 comprises the step of issuing 84 an alert message to the authorities that there is an inconsistency between the face image of the user 34 and the face image of the person whose identity details most closely match those of the user 34.

Otherwise, the facial recognition-based identity verification method 50 comprises the step of issuing 86 a report to the authorities indicating that that the user 34 has been recognized by the facial recognition-based identity verification system 2, wherein the report may optionally display the Activation Face ($F(t_a)$) and the Retrieved Facial Image.

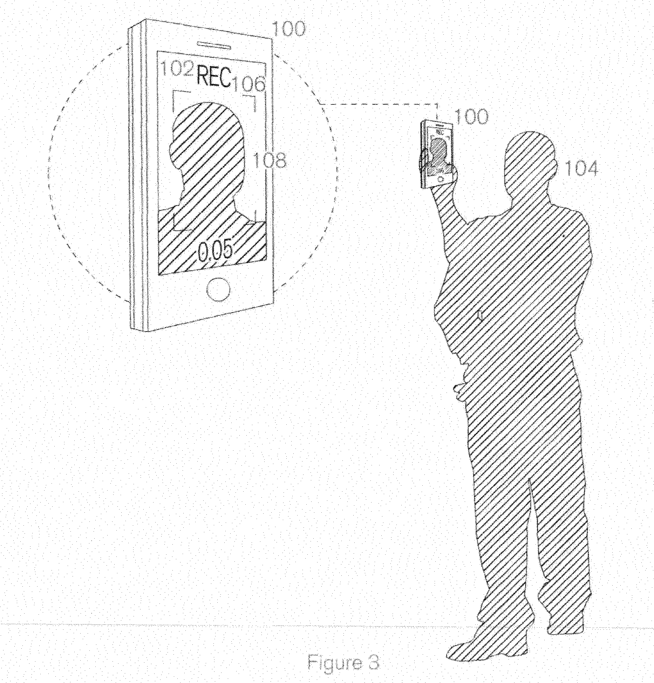

Referring to Figure 3, a first embodiment of the facial recognition-based identity verification system comprises a software application (not shown) adapted to be deployed and operated on a mobile telephony device 100. The software application is configured to display an icon (not shown) therefor on a display means 102 of the mobile telephony device 100. A user 104 is allowed to click on, or otherwise select the icon (not shown) to activate the software application. On activation of the software application, a digital camera (not shown) in the mobile telephony device 100 will be activated to acquire a stream of digital images. The acquired stream of digital images will be stored in the image buffer of the facial recognition-based identity verification system as described in connection with Figures 1 and 2. The acquired digital images will also be displayed on the display means 102 of the mobile telephony device 100. The software application is also adapted to display one or more framing guides 106 on the digital images displayed by the display means 102, to assist the user 104 in positioning the mobile telephony device 100 so that an acquired digital image of the user's face 108 is well-focussed and substantially located within the area encompassed by the or each framing guides 106 (and thereby optimally positioned within the focal plane of the digital camera). On achieving this positioning of the mobile telephony device 100, the software application is adapted to trigger the Activation Signal as shown in Figure 1.

The software application may further be adapted to prompt the user 104 to present their passport or other identity document to the digital camera (not shown) of the mobile telephony device 100, whereupon the software application is adapted to activate the digital camera to acquire a digital image of the presented identity document and extract relevant identifying information from the resulting digital image. The software application is further adapted to use the extracted identifying information as basis for retrieval of a Retrieved Matching Face (RMF) as discussed in connection with Figure 1.

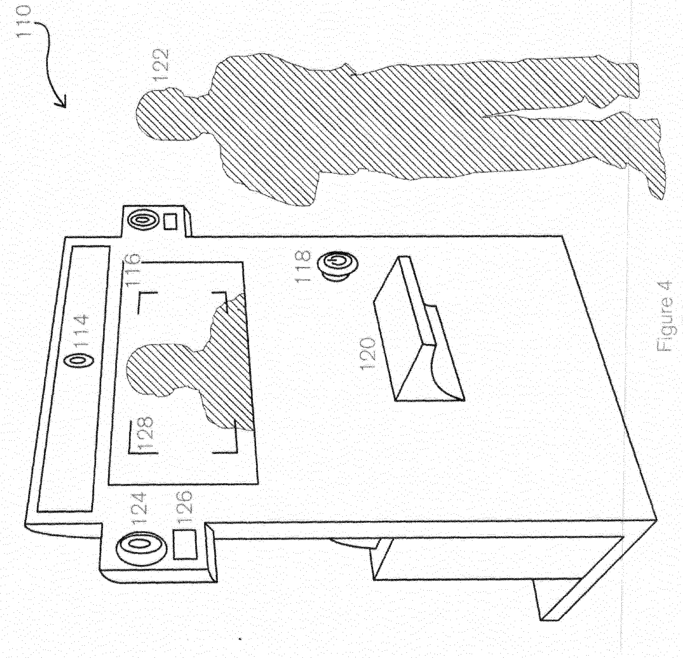

Referring to Figure 4, a further embodiment of the facial recognition-based identity verification system 110 may comprise an upstanding member 112, on which are mounted a primary digital camera 114, a display means 116, a trigger means 118 and a data entry means 120. The data entry means 120 may comprise a passport scanner or an identity card scanner or other device adapted to receive a presented identity document. Alternatively, the data entry means 120 may comprise a device (such as a keyboard) to allow the user 122 to manually or verbally provide claimed identity details. The facial recognition-based identity verification system 110 may also comprise a plurality of secondary digital cameras 124 disposed on either side of the primary digital camera 114 and adapted, in use, to capture profile views of the user (and thereby provide material to support an enhanced facial recognition method). Similarly, the facial recognition-based identity verification system 110 may comprise a plurality of lighting means 126 also arranged on either side of the primary digital camera 114 to provide uniform lighting conditions for the image acquisition by the primary digital camera 114 (and optionally the secondary digital cameras 124). The lighting means 126 may include a light emitting diode (LED) or other illuminating device.

In use, the primary digital camera 114 (and optionally the secondary digital cameras) 124 are adapted to acquire digital images of the vicinity of the facial recognition-based identity verification system 110. The acquired digital images are temporarily stored in an image buffer (not shown) of the facial recognition-based identity verification system 110, as discussed in connection with Figure 2. The acquired digital images are also displayed on the display means 116. The facial recognition-based identity verification system 110 is also adapted to display one or more framing guides 128 on the digital images displayed by the display means 1116, to assist the user 122 in positioning themselves relative to the primary digital camera 114 so that an acquired digital image of the user's face is well-focussed and substantially located within the area encompassed by the or each framing guides 108. In one embodiment, the facial recognition-based identity verification system 110 is adapted to prompt the user 122 to activate the trigger means 118 to cause an Activation Signal to be triggered as shown in Figure 1. Alternatively, in another embodiment, the facial recognition-based identity verification system 110 is adapted to trigger the Activation Signal as shown in Figure 1 on the positioning of the user's face within the area encompassed by the or each framing guides 128.

The facial recognition-based identity verification system 110 is further adapted to prompt the user 122 to present their passport or other identity document to the data entry means 120 for subsequent extraction of relevant identifying information therefrom. Alternatively, the facial recognition-based identity verification system 110 is further adapted to prompt the user 122 to manually or verbally provide the relevant identifying information as required.

Alterations and modifications may be made to the above without departing from the scope of the invention.

## Claims

1. A facial recognition based identity verification method comprising the steps of:

   allowing an operator to specify a value of a Recording Interval and a First Threshold Value;
   receiving a plurality of digital images acquired by a digital camera;
   storing digital images acquired over successive Recording Intervals;
   allowing a user to trigger an Activation Signal;
   receiving the Activation Signal and detecting the substantially largest face present in the digital image acquired substantially at that instant;
   continuing to receive and store digital images acquired over the Recording Interval immediately following receipt of the Activation Signal;
   detecting the substantially largest face present in each digital image acquired over the Recording Intervals immediately preceding and following receipt of the Activation Signal;
   calculating a one or more measures of matching between the substantially largest face detected in the digital image acquired on receipt of the Activation Signal and each of the substantially largest faces detected in the digital images acquired over the Recording Intervals immediately preceding and following receipt of the Activation Signal;
   calculating an aggregate value of the matching between the substantially largest face detected in the digital image acquired on receipt of the Activation Signal and the substantially largest faces detected in all of the digital images acquired over the Recording Intervals immediately preceding and following receipt of the Activation Signal;
   comparing the aggregate value with the First Threshold Value;

allowing a host organization to terminate the facial recognition based identity verification method in the event the aggregate value is less than the First Threshold Value; and otherwise, interrogating a repository to identify a one or more digital images in the repository of a face which most closely matches the substantially largest face detected in the digital image acquired on receipt of the Activation Signal; and

issuing an alert in the event an image is not found in the repository of a face that matches within a required degree of tolerance, the substantially largest face detected in the digital image acquired on receipt of the Activation Signal; and otherwise, issuing a report advising that the user has been identified.

2. The facial recognition based identity verification method as claimed in Claim 1 wherein the step of storing digital images acquired over successive Recording Intervals comprises the step of sequentially storing the digital images for a period substantially equal to the Recording Interval and subsequently deleting the digital images in the absence of the detection of the Activation Signal.

3. The facial recognition based identity verification method as claimed in Claim 1 wherein the step of interrogating a repository comprises the step of interrogating the repository in the event the host organization does not terminate the facial recognition based identity verification method.

4. The facial recognition based identity verification method as claimed in Claim 1 wherein
the step of interrogating a repository is preceded by a step of receiving details of the identity claimed by the user;
the step of interrogating the repository comprises the steps of
interrogating the repository to retrieve therefrom a record comprising details which most closely match the details of the identity claimed by the user; and comparing the digital image acquired on receipt of the Activation Signal with a digital image depicting the face of the person to whom the retrieved record pertains;
and the step of issuing an alert comprises the steps of issuing an alert in the event a record with details matching the details of the identity claimed by the user, is not found in the repository; or the face in the digital image acquired on receipt of the Activation Signal does not match to a required degree of tolerance the face of the person to whom the retrieved record pertains.

5. The facial recognition based identity verification method as claimed in Claim 4 wherein the step of receiving details of the identity claimed by the user comprises the steps of scanning an identity document presented by the user to obtain a scanned image thereof; and extracting relevant details from the scanned image.

6. The facial recognition based identity verification method as claimed in Claim 5 wherein the step of scanning an identity document presented by the user to obtain a scanned image thereof comprises the step of scanning a passport, a driving license or an identity card.

7. The facial recognition based identity verification method as claimed in Claim 1, wherein the step of calculating a one or more measures of matching between the substantially largest face detected in the image acquired on receipt of the Activation Signal and each of the substantially largest faces detected in the images acquired over the Recording Intervals immediately preceding and following receipt of the Activation Signal; comprises the step of calculating a one or more measures of matching selected from the set comprising Pearson correlations, covariances and cross products; Euclidean, Manhattan and squared distances and binary matching.

8. The facial recognition based identity verification method as claimed in Claim 1 wherein the method is executed, on a mobile telephony device and
the step of receiving a plurality of digital images acquired by a digital camera;
comprises the step of receiving a plurality of digital images acquired by a digital camera in the mobile telephony device; and
the step of allowing a user to trigger an Activation Signal comprises the steps of
displaying on a display means of the mobile telephony device the digital images acquired by the digital camera;
overlaying on the displayed digital images, a one or more framing guides adapted to guide the user into positioning the mobile telephony device to achieve optimal positioning of the user's face within the focal plane of the digital camera; and
triggering the Activation Signal on achieving the optimal positioning of the user's face relative to the digital camera.

9. The facial recognition based identity verification method as claimed in Claim 8 wherein the step of scanning an identity document presented by the user to obtain a scanned image thereof comprises the step of allowing the user to present the identity document to the digital camera of the mobile telephony device and using the digital camera to acquire a digital image of the presented identity document.

**10.** A facial recognition based identity verification apparatus comprising a primary digital camera; and a display means and an image buffer respectively adapted to display and temporarily store digital images acquired by the primary digital camera; wherein the facial recognition based identity verification apparatus further comprises a triggering means adapted in use to allow the user to trigger the issuance of an Activation Signal and a logic unit adapted to receive the Activation Signal and cause the storage of the digital images acquired by the primary digital camera over the Recording Intervals immediately preceding and following receipt of the Activation Signal; a face detector module adapted to detect the substantially largest face present in each stored digital image a calculating means adapted to calculate an aggregate value of the degree of matching between the substantially largest face detected in the digital image acquired on receipt of the Activation Signal and the substantially largest faces detected in the digital images acquired over the Recording Intervals immediately preceding and following receipt of the Activation Signal; a thresholding module adapted to compare the aggregate value against a predefined first threshold value and issue an alert in the event the aggregate value is less than the predefined first threshold value, and otherwise compare the substantially largest face detected in the digital image acquired on receipt of the Activation Signal with a plurality of digital images of authorised faces contained in the repository; and verify the identity of the user in the event of a match.

**11.** The facial recognition based identity verification apparatus as claimed in Claim 10 wherein the display means is further adapted, in use, to display guiding means, to guide the user into achieving the optimal positioning of their face within the primary focal plane of the digital camera.

**12.** The facial recognition based identity verification apparatus as claimed in Claim 10 wherein the facial recognition based identity verification apparatus comprises a data entry means adapted to allow the user to provide additional identifying information to the facial recognition based identity verification apparatus; wherein the thresholding module comprises a retrieval module adapted to retrieve from the repository a record comprising details that most closely match those of the additional identifying information; and the facial recognition based identity verification apparatus comprises a comparator adapted to compare the substantially largest face detected in the digital image acquired on receipt of the Activation Signal with a face contained in a digital image in the retrieved record; and a reporting means adapted to issue an alert in the event of a mismatch or otherwise issue a report stating that the user's identity has been verified.

**13.** The facial recognition based identity verification apparatus as claimed in Claim 12, wherein the data entry means comprises a passport scanner, or a driving licence scanner or an identity card scanner.

**14.** The facial recognition based identity verification apparatus as claimed in Claim 10, wherein the facial recognition based identity verification apparatus comprises at least two secondary digital cameras disposed on either side of the primary digital camera and adapted in use to capture profile views of the user.

**15.** The facial recognition based identity verification apparatus as claimed in Claim 10, wherein the facial recognition based identity verification apparatus comprises a plurality of lighting means disposed on either side of the primary digital camera and adapted in use to provide uniform lighting conditions for the primary digital camera.

Receive Digital Images | 52

Store Digital Images Acquired over Recording Interval | 54

Allow User to Trigger Activation Signal | 56

Extract Activation Image and Test Images | 58

Detect Activation Face and Each Test Face | 60

Calculate Individual Image Face Match | 62

Calculate Aggregate Temporal Match | 64

50

Aggregate Match > Threshold ? 66
N      Y

Issue Alert | 68

Interrogate Repository with ID_info 70

Retrieve RMR/RMF 72
RMF      RMR

RMF Found ?
N      Y

Alert 74      Issue Report 76

RMR Found ?
N      Y

Alert 78

Compare RMR with Activation Face 80

Match > Threshold ? 82

Alert 84      Issue Report 86

Figure 1

12

Figure 2

Figure 3

Figure 4

Europäisches
Patentamt

European
Patent Office

Office européen
des brevets

## EUROPEAN SEARCH REPORT

Application Number

EP 15 17 5368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 546 782 A1 (ACCENTURE GLOBAL SERVICES LTD [IE]) 16 January 2013 (2013-01-16) * paragraphs [0002] - [0014], [0038] - [0087]; figures 1-5 * | 1-15 | INV. G06K9/00 |
| X | DE FREITAS PEREIRA TIAGO ET AL: "Can face anti-spoofing countermeasures work in a real world scenario?", 2013 INTERNATIONAL CONFERENCE ON BIOMETRICS (ICB), IEEE, 4 June 2013 (2013-06-04), pages 1-8, XP032491230, DOI: 10.1109/ICB.2013.6612981 [retrieved on 2013-09-26] * sections 1-7; figures 1-3 * | 1-15 | |
| X | CHINGOVSKA IVANA ET AL: "Anti-spoofing in Action: Joint Operation with a Verification System", 2013 IEEE CONFERENCE ON COMPUTER VISION AND PATTERN RECOGNITION WORKSHOPS, IEEE, 23 June 2013 (2013-06-23), pages 98-104, XP032479935, DOI: 10.1109/CVPRW.2013.22 [retrieved on 2013-09-11] * sections 1-5 * * figures 1-4 * | 1-15 | TECHNICAL FIELDS SEARCHED (IPC) G06K |

The present search report has been drawn up for all claims

| Place of search | Date of completion of the search | Examiner |
|---|---|---|
| The Hague | 24 November 2015 | Nilsson, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 17 5368

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2015

| Patent document cited in search report | | Publication date | Patent family member(s) | Publication date |
|---|---|---|---|---|
| EP 2546782 | A1 | 16-01-2013 | BR 102012017010 A2 | 09-07-2013 |
| | | | CA 2782071 A1 | 11-01-2013 |
| | | | EP 2546782 A1 | 16-01-2013 |
| | | | ES 2495425 T3 | 17-09-2014 |
| | | | US 2013016882 A1 | 17-01-2013 |
| | | | US 2014037156 A1 | 06-02-2014 |
| | | | US 2015003692 A1 | 01-01-2015 |
| | | | US 2015310289 A1 | 29-10-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102750521